# EUROPEAN PATENT SPECIFICATION

(11) **EP 2 515 259 B1**
(45) Date of publication and mention of the grant of the patent: **15.08.2018**
(21) Application number: 11172115.5
(22) Date of filing: 30.06.2011
(51) Int. Cl.: G06K 19/077

(54) **A thin carrier device**
Dünnträgervorrichtung
Dispositif support mince

(30) Priority: 22.04.2011 TW 100114103
(43) Date of publication of application: 24.10.2012
(73) Proprietor: Walton Advanced Engineering Inc., Kaohsiung City Taipei (CN)
(72) Inventor: Yu, Hong-Chi, Kaohsiung City 806 (TW); Chang, Mao-Ting, Kaohsiung City 806 (TW)
(74) Representative: Viering, Jentschura & Partner mbB Patent- und Rechtsanwälte

(56) References cited:
- DE-U1-202006 014 345
- FR-A1- 2 945 880
- US-A1- 2007 197 101

## Description

### BACKGROUND OF THE INVENTION

### 1) FIELD OF THE INVENTION

The present invention relates to a data storage device, especially to a thin carrier device which allows an integrated circuit module's USB metal contact to be electrically connected to a computer's USB port effectively by means of a support pad's length positioned at a USB port's height.

### 2) DESCRIPTION OF THE PRIOR ART

The Internet era has facilitated information sharing accelerated as well as popularization and progress of information technology. In this regard, a variety of products such as computers and communications & consumer electronics have extensively permeated into consumers' lives.

Recently, the portable data storage device with a data transfer interface and one type of non-volatile memory (for instance, flash memory) integrated has been substantially popularized. On the other hand, a portable device with the USB (Universal Serial Bus) data transfer interface combined which features some advantages such as lightness, portability, and plug-and-play attracts the public's interests.

Accordingly, there are more and more compound products with USB data transfer interfaces integrated available in the market, for instance, the multi-functional data storage device (R.O.C. Patent No. M328060) comprises a flat case (60) manufactured to be a business card with an integrated circuit module installed inside to which a signal cable (61) and a USB (Universal Serial Bus) Series A male connector (62) of the signal cable (61) are connected. The case (60) comprises a first panel (601) and a second panel (602) wherein the first panel (601) is provided with two grooves connected each other such as a narrow wire groove (603) on its surface and a rectangular connector groove (604) to accommodate a USB Series A male connector (62) and the second panel (602) is printed with verified patterns, characters, or trademarks according to each demand of an enterprise (the government or an individual) for specific matters, advertisements, propaganda or instructions to operate specific matters. As a result, the case similar to a business card for conventional printed advertisements as well as digital data simultaneously combined and expressed makes some specific matters amply and completely displayed.

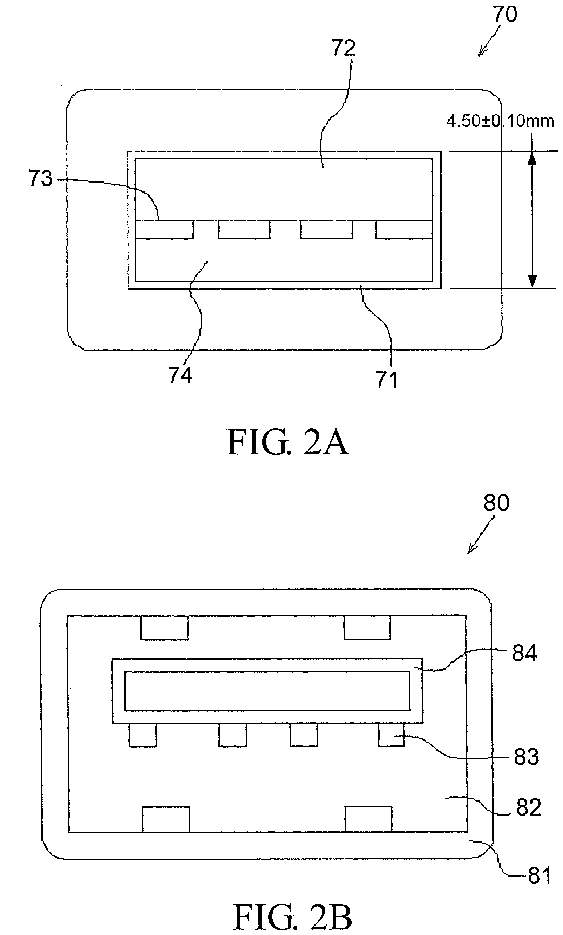

However, referring to FIG. 2A and 2B which illustrate a USB Series A male connector (70) as well as a USB Series A female connector (80) (unit: millimeter) wherein the USB Series A male connector (70) has a metal frame (71) with the thickness of 4.5mm ± 0.1mm and a partial thickness space (72) to accommodate a plurality of metal contacts (83) and a carrier (84) of the female connector (80) according to standards of the USB data transfer interface. Then, a thickness space (82) in the female connector (80) between 2.0 and 2.3mm is used to accommodate a plurality of metal contacts (73) and a carrier (74) of the male connector (70). That is, the distance from the carrier (84) to the outer frame (81) of the female connector (80) is equal to the minimum thickness of the male connector (70).

Accordingly, the thickness of 4.5mm±0.1mm for the male connector (70) along with the metal frame (71) under restrictions of standard specifications cannot be thinner and causes a USB Series A male connector not to be thinner or effectively connected to any other products such as credit card, ATM card, personal ID card (thickness between 1.7 and 1.9mm), general business card (thickness between 0.3 and 0.5mm) and promotional cardboard (thickness between 1.0 and 2.0mm) without other purposes developed despite products based on R.O.C. Patent No. M328060 being available in the market. DE202006014345 U1 discloses a memory card which has two interfaces, of which one corresponds to a universal serial bus (USB). A sliding block (2) corresponding to the USB dimension can be shifted to a certain length, relative to the card base, if the block is received in the card.

### SUMMARY OF THE INVENTION

To solve the said problems, the present invention provides a thin carrier device according to claim 1. The principal object of the present invention is to securely sustain the supporting segment and deliver the USB metal contact electrically connected to a female connector of the USB port effectively by means of the support pad's length positioned at the USB port's height without problems such as invalid electrical connection or poor contact between a USB metal contact and a female connector of a computer's USB port affected by the integrated circuit module's thinned thickness. Relying on the lowered thickness of the integrated circuit module, the present invention is able to integrate other thin products with their shapes including, without limitation, card, paper card or business card for the purpose of a thinning tendency.

In order to achieve the purposes hereinbefore, the present invention has the principal technical measures delivered with the technical schemes as follows. As a thin carrier device, the present invention comprises a main body, an integrated circuit module and an moving piece wherein the main body has an upper layer, a central accommodating layer, a lower layer and a recess; in this regard, the upper layer (or the lower layer) and the central accommodating layer are bound each other and the recess is located at the central accommodating layer; the integrated circuit module comprises a substrate, at least an electronic device and a USB metal contact wherein the electronic device is installed on the substrate's one inner surface and electrically connected to the USB metal contact on the substrate's one outer surface; the moving piece is freely installed in the recess and comprises a supporting segment, a support pad and at least a bulge wherein the support pad is adjacent to the supporting segment, which is used to sustain the integrated circuit module, and has its length positioned at the height of a USB port; the bulge is located on at least one side of the moving piece and accommodated in one track of the recess of the main body for the bulge reciprocally moving along the track.

The objects and the technical issues with respect to the present invention are further delivered with the following technical measures.

In the said thin carrier device, the recess also runs through the upper layer or the lower layer and aside of the main body.

In the said thin carrier device, the track runs through the side of the main body and the bulge moving along the track allows the moving piece to freely leave the main body.

In the said thin carrier device, the track does not run through the side of the main body and the bulge freely moves along the track only.

In the said thin carrier device, the upper layer or the lower layer can be printed with relevant pages according to requirements.

In the said thin carrier device, there is an adhesive layer applied between the upper layer and the central accommodating layer or between the lower layer and the central accommodating layer for the upper layer (or the lower layer) and the central accommodating layer bound each other.

In the said thin carrier device, the integrated circuit module's height is not more than 1.0mm.

In the said thin carrier device, the support pad's length is not less than 1.0mm.

In the said thin carrier device, the supporting segment and the support pad are designed as one-piece structure and a groove is prepared at a joint of the supporting segment and the support pad.

In the said thin carrier device, the supporting segment and the support pad could be designed as two separate parts, and the supporting segment is adjacent to the support pad by means of a gap and further adhered to the support pad with at least an adhesive film wherein the USB metal contact is exposed beyond the adhesive film.

In the said thin carrier device, the moving piece is manufactured in an injection forming technology by which the integrated circuit module is encased and the USB metal contact is exposed.

In the said thin carrier device, the integrated circuit module could be a Chip-On-Board (COB) package.

In the said thin carrier device, the upper layer, the central accommodating layer and the lower layer could be manufactured in either each of PVC, PET and PC or a combination of these materials thereof.

In the said thin carrier device, the support pad could be manufactured in a flexible material.

In the said thin carrier device, there is one interior angle between the supporting segment and the support pad less than 180 degrees as the support pad moves from the main body and is shifted toward the supporting segment's one lower surface.

In contrast to the prior arts, the present invention allows the support pad's length to posit at the USB port's height for the supporting segment securely held and the USB metal contact electrically contacting with a female connector of the USB port effectively without problems such as invalid electrical connection or poor contact between a USB metal contact and a female connector of a computer's USB port affected by the integrated circuit module's thinned thickness. Relying on the lowered thickness of the integrated circuit module, the present invention is able to integrate other thin products such as card-type product for the purpose of a thinning tendency.

### BRIEF DESCRIPTIONS OF THE DRAWINGS

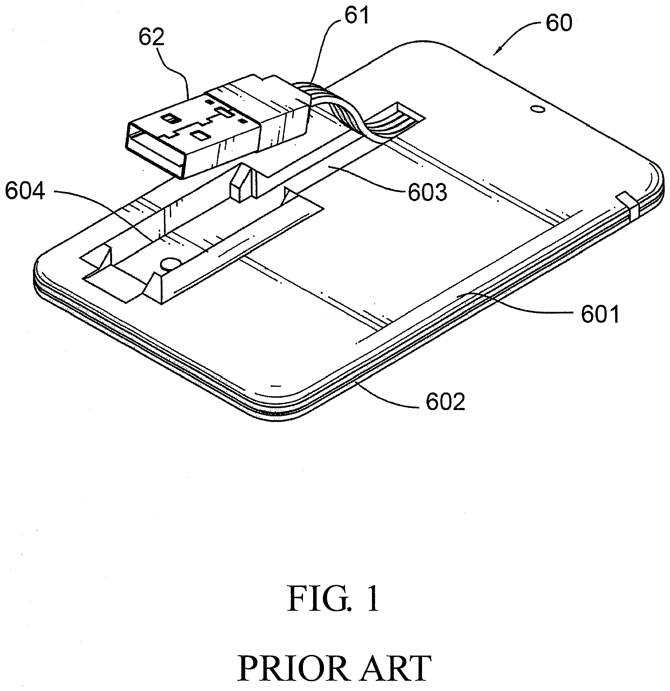

- FIG. 1: is one perspective view of a conventional card-type device manufactured in the prior arts.
- FIG. 2A: is one sectional view of a USB Series A male connector.
- FIG. 2B: is one sectional view of a USB Series A female connector.
- FIG. 3: is one perspective view of an example of a thin carrier device.
- FIG. 4: is one perspective view of an example of a thin carrier device during operation.
- FIG. 5: is one sectional view of an example of a thin carrier device.
- FIG. 6: is one sectional view of an example of a thin carrier device during operation.
- FIG. 7: is another sectional view of the principal embodiment for the present invention of a thin carrier device.
- FIG. 8: is another perspective view of the principal embodiment for the present invention of a thin carrier device during operation during operation.
- FIG. 9: is another sectional view of the principal embodiment for the present invention of a thin carrier device during operation.

### DETAILED DESCRIPTIONS OF THE PREFERRED EMBODIMENTS

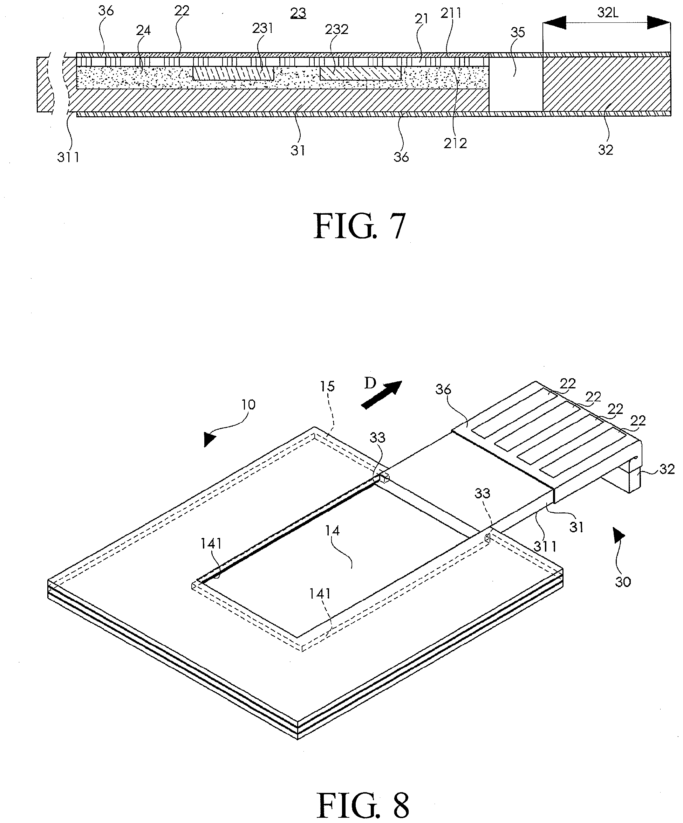

In order to ensure purposes, characteristics, and effects of the present invention substantially understood, some preferred embodiments in regard to the present invention are particularly specified as follows. FIGS. 7 to 9 illustrate the principal embodiment of the present invention of a thin carrier device (1).

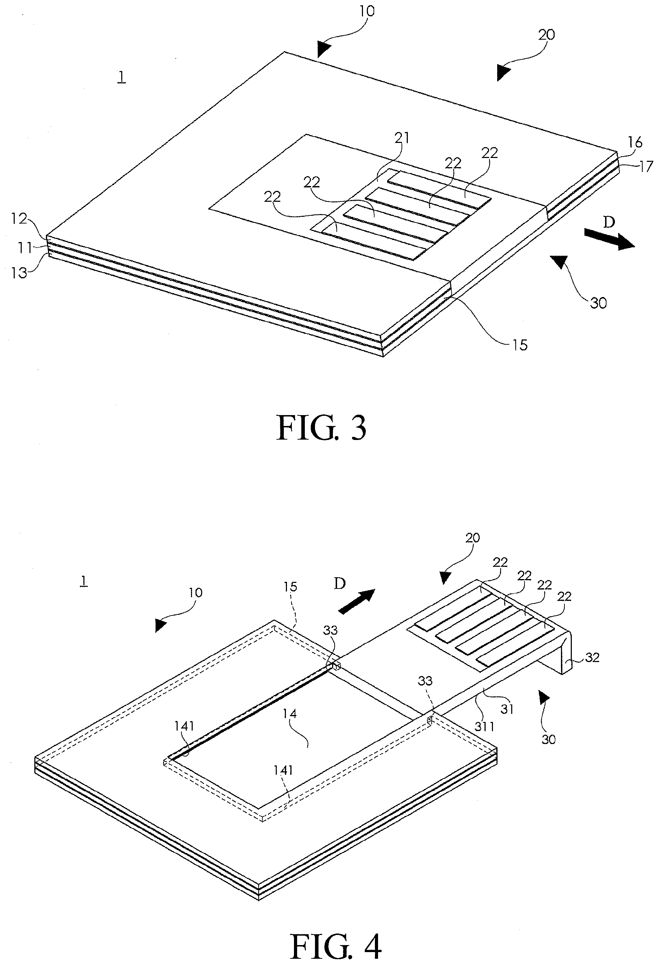

Referring to FIGS. 3 and 4 which illustrate an example of a thin carrier device (1) comprising at least a main body (10), an integrated circuit module (20) and an moving piece (30); preferably, the height of the main body (10) is not less than 0.4mm; the main body (10) comprises an upper layer (13), a central accommodating layer (11), a lower layer (12) and a recess (14) wherein the moving piece (30) is freely installed in the recess (14); additionally, the upper layer (13) (or the lower layer (12)) and the central accommodating layer (11) are bound each other, and the recess (14) is located at the central accommodating layer (11).

Preferably, the recess (14) could runs through the upper layer (13) (or the lower layer (12)) and a side (15) of the main body (10) for the moving piece (30) securely installed in the recess (14).

Alternatively, the recess (14) could run through the upper layer (13), the lower layer (12) and the side (15) of the main body (10) for the height of the main body (10) further curtailed (not shown in figures). In this embodiment, the recess (14) runs through the lower layer (12) and the side (15) of the main body (10).

Preferably, there is an adhesive layer (17) prepared between the upper layer (13) and the central accommodating layer (11), and an adhesive layer (16) prepared between the lower layer (12) and the central accommodating layer (11) for the upper layer (13) (or the lower layer (12)) and the central accommodating layer (11) bound via the adhesive layers (17, 16).

Specifically, the upper layer (13) or the lower layer (12) can be applicable to advertisement or marketing based on relevant printed pages. Additionally, the upper layer (13), the central accommodating layer (11) or the lower layer (12) could be manufactured in materials including, without limitation, PVC, PET, PC and a combination of these materials thereof.

Preferably, there is one film coated on an upper surface of the upper layer (13) or a lower surface of the lower layer (12) as one protective layer (not shown in figures).

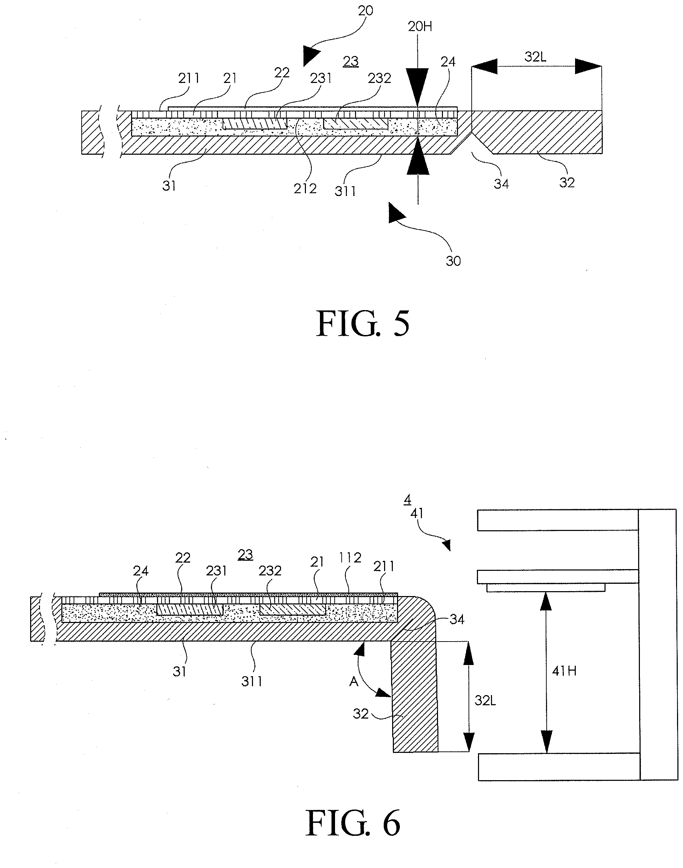

Referring to FIG. 5 which illustrates the integrated circuit module (20) is one thin structure having the height (20H) not more than 1.0mm, encased to be a Chip-On-Board (COB) package and comprising a substrate (21), at least an electronic device (23) and a USB metal contact (22) wherein the electronic device (23) could be installed on an inner surface (212) of the substrate (21) and electrically connected to the substrate (21) by means of a wire bonding or a flip chip technique (not shown in the figure). In addition, the USB metal contact (22) is installed on an outer surface (211) of the substrate (21).

Specifically, the substrate (21) could be a high-density double-sided multi-layer printed circuit board with circuits (not shown in figures) developed inside as an interface for transmit of electricity and allows the USB metal contact (22) to be electrically connected to the electronic device (23) via the substrate (21).

In detail, the electronic device (23) comprises at least a memory unit (231) and a control unit (232). The purposes of the memory unit (231) and the control unit (232) which is electrically connected between the memory unit (231) and the USB metal contact (22) are supplying readable / writable digital data and demanding / controlling data to be imported and exported, respectively. The USB metal contact (22) is plugged into a female connector of a USB port (41) on a computer (4) for exchange of digital data (also shown in FIG. 6).

Preferably, the USB metal contact (22) is compatible to the specifications of either at least one data transfer interface between the USB 2.0 Series A male connector and the USB 3.0 Series A male connector or a combination of these two data transfer interfaces thereof.

Preferably, the inner surface (212) of the substrate (21) on the integrated circuit module (20) is developed to be a package body (24) in which the electronic device (23) is encased.

Additionally, passive devices (not shown in figures) necessary to the integrated circuit module (20) are also installed on the inner surface (212) of the substrate (21) and encased inside the package body (24).

Referring to FIGS. 4 and 5 which illustrate the moving piece (30) freely accommodated in the recess (14) and comprising a supporting segment (31), a support pad (32) and at least a bulge (33) wherein the supporting segment (31) is used to sustain the integrated circuit module (20) and adjacent to the support pad (32);

Preferably, the moving piece (30) is developed in the injection forming technology by which the integrated circuit module (20) is encased and the USB metal contact (22) is exposed.

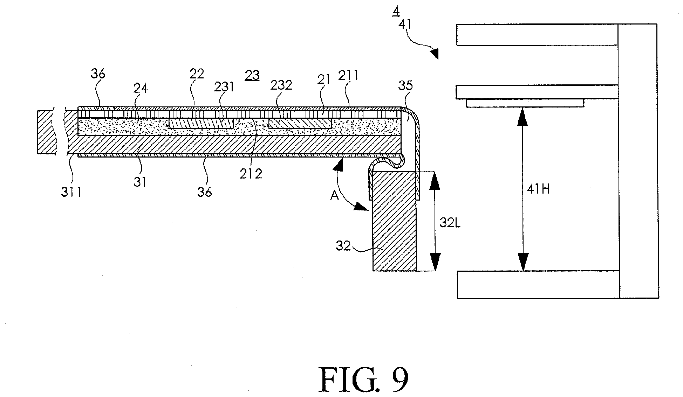

Referring to FIGS. 5 and 6 which illustrate the supporting segment (31) and the support pad (32) are designed as a one-piece structure that is provided with a groove (34) adjacent to two parts' joint and the groove (34) preferably includes but is not limited to the "A" shape. Alternatively, referring to FIGS. 7 and 9 which illustrate the supporting segment (31) is designed to be separated from but adjacent to the support pad (32) by a gap (35) and further adhered to the support pad (32) via at least an adhesive film (36) which wraps around an area between the supporting segment (31) and the support pad (32) (FIGS. 7 and 9 as examples explained for the present invention) or is horizontally applied between a lower surface of the supporting segment (31) and a lower surface of the support pad (32) (not shown in figures), and the USB metal contact (22) is noticeably exposed beyond the adhesive film (36) for the USB metal contact (22) electrically contacting with a female connector of the USB port (41);

Referring to FIG. 4 or FIG. 8 which illustrates the bulge (33) is placed on at least one side of the moving piece (30) and accommodated in a track (141) of the recess (14) on the main body (10) for the bulge (33) reciprocally moving along the track (141).

Specifically, the bulge (33) moving along the track (141) allows the moving piece (30) freely leaves the main body (10) as the track (141) runs through the side (15) of the main body (10). Accordingly, the USB metal contact (22) electrically connected to a female connector of the USB port (41) could be conveniently performed by one user who makes use of the integrated circuit module (20).

Alternatively, the bulge (33) freely sliding along the track (141) only but not running through the side (15) of the main body (10) makes the integrated circuit module (20) and the moving piece (30) become an assembled structure for the present invention properly held by one user.

In addition, referring to FIG. 6 or FIG. 9 which illustrates the length (32L) of the support pad (32) is positioned at the height (41H) of a USB port (41), preferably the length (32L) of the support pad (32) not less than 1.0mm or from 1.0mm to 2.3mm. Preferably, the support pad (32) could be manufactured in a flexible material.

Accordingly, referring to FIGS. 3 to 9 which illustrate a "A" shape (FIGS. 5 and 6) or a gap (FIGS. 7 and 9) design between the supporting segment (31) and support pad (32) makes the support pad (32) be shifted to a lower surface (311) of the supporting segment (31) and an interior angle (A) between the supporting segment (31) and the support pad (32) less than 180 degrees when the bulge (33) moving along the track (141) and shifted toward the default direction (D) causes the support pad (32) to move from the main body (10). Then, referring to FIG. 6 or FIG. 9 which illustrates the length (32L) of the support pad (32) is positioned at the height (41H) of the USB port (41) in the direction of one force applied by one user who connects the USB metal contact (22) to a female connector of the USB port (41) on a computer (4) for the supporting segment (31) securely held and the USB metal contact (22) electrically connected to a female connector of the USB port (41) effectively.

It deserved to be mentioned that the "A" shape (FIGS. 5 and 6) or the gap (FIG. 7 or 9) design between the supporting segment (31) and the support pad (32) includes an intention of delivering the support pad (32) shifted toward a lower surface (311) of the supporting segment (31). For instance, a flexible element (not shown in figures) used to arrange the supporting segment (31) adjacent to the support pad (32) is manufactured in a plastic lamina or an elastic material for the support pad (32) shifted toward a lower surface (311) of the supporting segment (31) when the support pad (32) is moved from the moving piece (30).

## Claims

1. A thin carrier device (1), comprising:
a main body (10) with an upper layer (13), a central accommodating layer (11), a lower layer (12) and a recess (14) wherein the upper layer (13) or the lower layer (12) and the central accommodating layer (11) are bound to each other, and the recess (14) is located at the central accommodating layer (11);
an integrated circuit module (20) with a substrate (21), at least an electronic device (23) and a USB metal contact (22), wherein the electronic device (23) is installed on an inner surface (212) of the substrate (21) and electrically connected to the USB metal contact (22) on an outer surface (211) of the substrate (21) ;
a moving piece (30) freely installed in the recess (14) and having a supporting segment (31), a support pad (32) and at least a bulge (33), wherein the support pad (32) is adjacent to the supporting segment (31), the supporting segment (31) is used to sustain the integrated circuit module (20), and the length (32L) of the support pad (32) is positioned at the height (41H) of a USB port (41); the bulge (33) is installed on at least one side of the moving piece (30) and accommodated in a track (141) of the recess (14) of the main body (10) for the bulge (33) reciprocally moving along the track (141) ;
**characterised in that**:
the supporting segment (31) is designed to be separated from but adjacent to the support pad (32) by a gap (35) and further adhered to the support pad (32) with at least an adhesive film (36) by which the USB metal contact (22) is exposed.

2. The thin carrier device (1) according to Claim 1, wherein the recess (14) runs through the upper layer (13) or the lower layer (12) and a side (15) of the main body (10).

3. The thin carrier device (1) according to Claim 2, wherein the track (141) runs through the side (15) of the main body (10) and the bulge (33) when moving along the track (141) makes the moving piece (30) freely leave the main body (10).

4. The thin carrier device (1) according to Claim 2, wherein the track (141) does not run through the side (15) of the main body (10) and the bulge (33) slides along the track (141) only.

5. The thin carrier device (1) according to Claim 1, wherein the upper layer (13) or the lower layer (12) can be printed with relevant pages according to requirements.

6. The thin carrier device (1) according to Claim 1, wherein adhesive layers (17, 16) are provided between the upper layer (13) and the central accommodating layer (11) as well as between the lower layer (12) and the central accommodating layer (11) for the upper layer (13) or the lower layer (12) and the central accommodating layer (11) bound each other.

7. The thin carrier device (1) according to Claim 1, wherein the height (20H) of the integrated circuit module (20) is not more than 1.0 mm.

8. The thin carrier device (1) according to Claim 1, wherein the length (32L) of the support pad (32) is not less than 1.0 mm.

9. The thin carrier device (1) according to Claim 1, wherein the supporting segment (31) and the support pad (32) are designed as a one-piece structure with a groove (34) provided for the two parts' joint.

10. The thin carrier device (1) according to Claim 1, wherein the moving piece (30) is manufactured in an injection forming technology by which the integrated circuit module (20) is encased and the USB metal contact (22) is exposed.

11. The thin carrier device (1) according to Claim 1, wherein the integrated circuit module (20) is a Chip-On-Board (COB) package.

12. The thin carrier device (1) according to Claim 1, wherein the upper layer (13), the central accommodating layer (11) and the lower layer (12) are manufactured in either each of PVC, PET and PC or in a combination of these materials.

13. The thin carrier device (1) according to Claim 1, wherein the support pad (32) is manufactured in a flexible material.

14. The thin carrier device (1) according to Claim 1, wherein there is an interior angle (A) between the supporting segment (31) and the support pad (32) less than 180 degrees when the support pad (32) is moved from the main body (10) and shifted toward a lower surface (311) of the supporting segment (31).

## Patentansprüche

1. Ein dünnes Trägergerät (1), umfassend:
einen Grundkörper (10) mit einer oberen Schicht (13), einer zentralen Aufnahmeschicht (11), einer unteren Schicht (12) und mit einer Aussparung (14), wobei die obere Schicht (13) oder die untere Schicht (12) und die zentrale Aufnahmeschicht (11) aneinander angehaftet sind, während die Aussparung (14) an der zentralen Aufnahmeschicht (11) gebildet ist;
ein integriertes Stromkreismodul (20) mit einem Trägermaterial (21), mindestens einem elektronischen Gerät (23) und mit einem USB-Metallkontakt (22), wobei das elektronische Gerät (23) an einer Innenfläche (212) des Trägermaterials (21) installiert und elektrisch mit dem USB-Metallkontakt (22) auf einer Außenfläche (211) des Trägermaterials (21) verbunden ist;
einen beweglichen Teil (30), der frei in der Aussparung (14) installiert ist und ein Trägersegment (31), ein Auflagepolster (32) und mindestens eine Ausbeulung (33) aufweist, wobei das Auflagepolster (32) neben dem Trägersegment (31) angeordnet ist; mit dem Trägersegment (31) das integrierte Stromkreismodul (20) unterstützt wird und die Länge (32L) des Auflagepolsters (32) an der Höhe (41H) eines USB-Anschlusses (41) positioniert ist; die Ausbeulung (33) auf mindestens einer Seite des beweglichen Teils (30) installiert und in einer Schiene (141) der Aussparung (14) des Grundkörpers (10) aufgenommen ist, um die Wulst (33) der Schiene (141) entlang hin und her zu bewegen;
**dadurch gekennzeichnet, dass**:
das Trägersegment (31) so gebildet ist, um vom Auflagepolster (32) abgetrennt und dennoch neben dieses mit einer Lücke (35) angeordnet ist und weiter an das Auflagepolster (32) mit mindestens einer Klebefolie (36), durch die der USB-Metallkontakt (22) freigelegt ist, angehaftet wird.

2. Das dünne Trägergerät (1) nach Anspruch 1, wobei die Aussparung (14) durch die obere Schicht (13) oder durch die untere Schicht (12) und durch eine Seite (15) des Grundkörpers (10) gebildet ist.

3. Das dünne Trägergerät (1) nach Anspruch 2, wobei die Schiene (141) durch die Seite (15) des Grundkörpers (10) verläuft und der bewegliche Teil (30) frei vom Grundkörper (10) entfernt wird, wenn die Wulst (33) an der Schiene (141) entlang hin und her bewegt wird.

4. Das dünne Trägergerät (1) nach Anspruch 2, wobei die Schiene (141) nicht durch die Seite (15) des Grundkörpers (10) verläuft und die Wulst (33) nur der Schiene (141) entlang gleitet.

5. Das dünne Trägergerät (1) nach Anspruch 1, wobei entsprechenden Seiten je nach Anforderung auf die obere Schicht (13) oder auf die untere Schicht (12) gedruckt werden können.

6. Das dünne Trägergerät (1) nach Anspruch 1, wobei Klebstoffschichten (17, 16) zwischen der oberen Schicht (13) und der zentralen Aufnahmeschicht (11) sowie zwischen der unteren Schicht (12) und der zentralen Aufnahmeschicht (11) vorgesehen sind, um die obere Schicht (13) oder die untere Schicht (12) und die zentrale Aufnahmeschicht (11) aneinander anzuhaften.

7. Das dünne Trägergerät (1) nach Anspruch 1, wobei die Höhe (20H) des integrierten Stromkreismoduls (20) nicht größer als 1,0 mm ist.

8. Das dünne Trägergerät (1) nach Anspruch 1, wobei die Länge (32L) des Auflagepolsters (32) nicht geringer als 1,0 mm ist.

9. Das dünne Trägergerät (1) nach Anspruch 1, wobei das Trägersegment (31) und das Auflagepolster (32) einstückig und mit einer Rille (34) als Fuge der beiden Teile gebildet sind.

10. Das dünne Trägergerät (1) nach Anspruch 1, wobei der bewegliche Teil (30) mit einer Injektions-Umformtechnik angefertigt wird, durch die das integrierte Stromkreismodul (20) ummantelt und der USB-Metallkontakt (22) freigelegt werden.

11. Das dünne Trägergerät (1) nach Anspruch 1, wobei das integrierte Stromkreismodul (20) ein Chip-On-Board-Paket (COB) ist.

12. Das dünne Trägergerät (1) nach Anspruch 1, wobei die obere Schicht (13), die zentrale Aufnahmeschicht (11) und die untere Schicht (12) entweder je aus PVC I PET und PC oder aus einer Kombination dieser Materialien angefertigt sind.

13. Das dünne Trägergerät (1) nach Anspruch 1, wobei das Auflagepolster (32) aus einem flexiblen Material angefertigt ist.

14. Das dünne Trägergerät (1) nach Anspruch 1, wobei zwischen dem Trägersegment (31) und dem Auflagepolster (32) ein Innenwinkel gebildet ist, der geringer als 180 Grad ist, wenn das Auflagepolster (32) vom Grundkörper (10) weg bewegt und auf eine untere Oberfläche (311) des Trägersegments (31) zu verschoben wird.

## Revendications

1. Dispositif de support mince (1), **caractérisé par le fait qu'**il comprend :
un corps principal (10) avec une couche supérieure (13), une couche d'accueil centrale (11), une couche inférieure (12) et un évidement (14), la couche supérieure (13) ou la couche inférieure (12) et la couche d'accueil centrale (11) sont liées les unes aux autres, et l'évidement (14) est situé sur la couche d'accueil centrale (11) ;
un module de circuit intégré (20) avec un substrat (21), au moins un dispositif électronique (23) et un contact USB métallique (22), le dispositif électronique (23) est placé sur une surface interne (212) du substrat (21) et connecté électriquement au contact USB métallique (22) sur une surface externe (211) du substrat (21) ;
une pièce mobile (30) placée librement dans l'évidement (14) et comportant un segment de support (31), une patte de support (32) et au moins une protubérance (33), la patte de support (32) est adjacente au segment de support (31), le segment de support (31) est utilisé pour maintenir le module de circuit intégré (20), et la longueur (32L) de la patte de support (32) est positionnée à la hauteur (41H) d'un port USB (41) ; la protubérance (33) est placée sur au moins un côté de la pièce mobile (30) et logée dans une glissière (141) de l'évidement (14) du corps principal (10) pour que la protubérance (33) puisse se déplacer dans un mouvement de va-et-vient le long de la glissière (141) ;
**caractérisé en ce que** :
le segment de support (31) est conçu pour être séparé par un espacement de la patte de support (32) tout en étant adjacent à celle-ci (35) et encore adhéré à la patte de support (32) avec au moins un film adhésif (36) grâce auquel le contact USB métallique (22) est révélé.

2. Dispositif de support mince (1) selon la Revendication 1, **caractérisé par le fait que** l'évidement (14) traverse la couche supérieure (13) ou la couche inférieure (12) et un côté (15) du corps principal (10).

3. Dispositif de support mince (1) selon la Revendication 2, **caractérisé par le fait que** la glissière (141) traverse le côté (15) du corps principal (10) et la protubérance (33) en se déplaçant le long de la glissière (141) permet à la pièce mobile (30) de quitter librement le corps principal (10).

4. Dispositif de support mince (1) selon la Revendication 2, **caractérisé par le fait que** la glissière (141) ne traverse pas le côté (15) du corps principal (10) et la protubérance (33) glisse seulement le long de la glissière (141).

5. Dispositif de support mince (1) selon la Revendication 1, **caractérisé par le fait que** la couche supérieure (13) ou la couche inférieure (12) peuvent être imprimées avec les pages pertinentes selon les exigences.

6. Dispositif de support mince (1) selon la Revendication 1, **caractérisé par le fait que** les couches adhésives (17, 16) sont disposées entre la couche supérieure (13) et la couche d'accueil centrale (11) de même qu'entre la couche inférieure (12) et la couche d'accueil centrale (11) pour que la couche supérieure (13) ou la couche inférieure (12) et la couche d'accueil centrale (11) soient liées entre elles.

7. Dispositif de support mince (1) selon la Revendication 1, **caractérisé par le fait que** la hauteur (20H) du module de circuit intégré (20) n'est pas supérieure à 1,0 mm.

8. Dispositif de support mince (1) selon la Revendication 1, **caractérisé par le fait que** la longueur (32L) de la patte de support (32) n'est pas inférieure à 1,0 mm.

9. Dispositif de support mince (1) selon la Revendication 1, **caractérisé par le fait que** le segment de support (31) et la patte de support (32) sont conçus comme une structure monobloc avec une rainure (34) servant à joindre les deux parties.

10. Dispositif de support mince (1) selon la Revendication 1, **caractérisé par le fait que** la pièce mobile (30) est fabriquée grâce à une technologie de moulage par injection au moyen de laquelle le module de circuit intégré (20) est enchâssé et le contact USB métallique (22) révélé.

11. Dispositif de support mince (1) selon la Revendication 1, **caractérisé par le fait que** le module de circuit intégré (20) est un ensemble Puce Sur Carte (COB).

12. Dispositif de support mince (1) selon la Revendication 1, **caractérisé par le fait que** la couche supérieure (13), la couche d'accueil centrale (11) et la couche inférieure (12) sont fabriquées exclusivement en PVC, PET et PC ou en combinant ces matériaux.

13. Dispositif de support mince (1) selon la Revendication 1, **caractérisé par le fait que** la patte de support (32) est fabriquée dans un matériau flexible.

14. Dispositif de support mince (1) selon la Revendication 1, **caractérisé par le fait qu'**il y a un angle intérieur (A) entre le segment de support (31) et la patte de support (32) inférieur à 180 degrés lorsque la patte de support (32) est déplacée depuis le corps principal (10) et décalée vers une surface inférieure (311) du segment de support (31).
